# EUROPEAN PATENT SPECIFICATION

(11) **EP 4 015 336 B1**
(45) Date of publication and mention of the grant of the patent: **19.02.2025**
(21) Application number: 21195534.9
(22) Date of filing: 08.09.2021
(51) Int. Cl.: B60W 60/00, B60K 35/00

(54) **SYSTEMS, DEVICES, AND METHODS INVOLVING DRIVING SYSTEMS**
SYSTEME, VORRICHTUNGEN UND VERFAHREN MIT ANTRIEBSSYSTEMEN
SYSTÈMES, DISPOSITIFS ET PROCÉDÉS IMPLIQUANT DES SYSTÈMES DE COMMANDE

(30) Priority: 18.12.2020 US 202017126089
(43) Date of publication of application: 22.06.2022
(73) Proprietor: Intel Corporation, Santa Clara, CA 95054 (US)
(72) Inventor: GEISSLER, Florian, 81673 Munich (DE); ROSALES, Rafael, 82008 Unterhaching (DE); OBORIL, Fabian Israel, 75139 Karlsruhe (DE); BUERKLE, Cornelius, 76137 Karlsruhe (DE); PAULITSCH, Michael, 85521 Ottobrunn (DE); ALVAREZ, Ignacio J., Portland 97229 (US); GONZÁLEZ AGUIRRE, David Israel, Portland 97209 (US)
(74) Representative: Viering, Jentschura & Partner mbB Patent- und Rechtsanwälte

(56) References cited:
- EP-A1- 3 252 432
- EP-A2- 3 109 118
- DE-A1- 102012 112 802
- US-A1- 2007 131 468
- US-A1- 2011 169 625
- US-A1- 2018 046 851

## Description

### Technical Field

Various aspects provided herein generally relate to driving systems.

### Background

For automated driving systems (ADS), a vehicle may have the technical capability to perceive the external environment and to perform all necessary driving tasks on its own. However, a human driver still has to be present to take back control and override the ADS decisions in challenging situations that fall out of the Operational Design Domain (ODD).

In order to determine whether a driver is attentional, and thus ready to take back control, Driver Monitoring Systems (DMS) are deployed as a safety-critical component. A key challenge is the assessment of the ODD compliance, which means that the ADS has to identify whether or not it is currently in a state that belongs to the intended ODD for the L3 system. This can be defined as the "operating conditions under which a given driving automation system or feature thereof is specifically designed to function, including, but not limited to, environmental, geographical, and time-of-day restrictions, and/or the requisite presence or absence of certain traffic or roadway characteristics."

This assessment can be performed in a separate component called the ODD monitor. A major safety risk occurs if this assessment is false positive, i.e. if the monitor assesses to be in the ODD, while in reality it is not. False negative ODD compliance assessments on the other hand lead to unnecessary handovers which reduce availability of the L3 system and can be potentially unsafe as well during the transition phase.

German patent application publication DE 10 2012 112 802 A1 discloses an automated driving system with a hazard warning device that may alert the driver to a hazard and/or the potential need of the driver to retake control of the vehicle during autonomous or semi-autonomous driving. The takeover probability is determined by a risk estimator based on environment data and vehicle dynamics data of vehicle. The driver's attention level is estimated by an attention estimation unit, and the period of time for the generation of the warning signal is determined from the transfer probability as a function of the driver's attention level.

US patent application publication US 2007/0131468 A1 discloses a vehicle with a pre-safe system in which active and/or passive safety devices are activated based on information recorded of the area surrounding the vehicle and based on a driving situation data detection device. The recorded information of the surrounding area is evaluated to determine whether a collision is plausible. The active and/or passive safety features of the vehicle are activated when the information of the surrounding area indicates a potential collision object and when data from the driving situation data detection device indicates a driver response that matches a predefined response for how a driver is expected to respond when a potential collision object is present and a collision is plausible. The number of false positives in detecting potential collision objects may be reduced by comparing the driver's actual reaction to one that would normally take place when the driver notices that a collision object is present.

### Summary of the Invention

The invention pursued in this application is set out by the appended set of claims.

### Brief Description of the Drawings

In the drawings, like reference characters generally refer to the same parts throughout the different views. The drawings are not necessarily to scale; emphasis instead generally being placed upon illustrating the principles of the invention. In the following description, various aspects of the invention are described with reference to the following drawings, in which:
FIG. 1 shows an exemplary autonomous vehicle in accordance with various aspects provided herein.
FIG. 2 shows various exemplary electronic components of a safety system of the vehicle in accordance with various aspects provided herein.
FIG. 3 shows an exemplary network area with various communication devices according to some aspects.
FIG. 4 is a diagram that shows various components related to driver monitoring according to exemplary aspects provided herein.
FIG. 5 shows a table describing automated driving levels.
FIG. 6 shows an exemplary diagram illustrating the ODD compliance assessment according to exemplary aspects provided herein.
FIG. 7 shows a table exemplary signal mapping according to exemplary aspects provided herein.
FIG. 8 shows an exemplary method 800 according to exemplary aspects provided herein.

### Description

The following detailed description refers to the accompanying drawings that show, by way of illustration, exemplary details and aspects in which the invention may be practiced.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The phrases "group (of)", "set (of)", "collection (of)", "series (of)", "sequence (of)", "grouping (of)", etc., and the like in the description and in the claims, if any, refer to a quantity equal to or greater than one, i.e., one or more. The phrases "proper subset", "reduced subset", and "lesser subset" refer to a subset of a set that is not equal to the set, illustratively, referring to a subset of a set that contains fewer elements than the set.

The phrase "at least one of" with regard to a group of elements may be used herein to mean at least one element from the group including the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in the form of a pointer. However, the term "data" is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit, and may also be referred to as a "processing circuit," "processing circuitry," among others. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality, among others, and conversely that any single processor, controller, or logic circuit detailed herein may be realized as two (or more) separate entities with equivalent functionality, among others.

As utilized herein, terms "module", "component," "system," "circuit," "element," "slice," "circuitry," and the like are intended to refer to a set of one or more electronic components, a computer-related entity, hardware, software (e.g., in execution), and/or firmware. For example, circuitry or a similar term can be a processor, a process running on a processor, a controller, an object, an executable program, a storage device, and/or a computer with a processing device. By way of illustration, an application running on a server and the server can also be circuitry. One or more circuits can reside within the same circuitry, and circuitry can be localized on one computer and/or distributed between two or more computers. A set of elements or a set of other circuits can be described herein, in which the term "set" can be interpreted as "one or more."

As used herein, "memory" is understood as a computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of driven or drivable object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, a rocket, and the like.

A "ground vehicle" may be understood to include any type of vehicle, as described above, which is configured to traverse or be driven on the ground, e.g., on a street, on a road, on a track, on one or more rails, off-road, etc. An "aerial vehicle" may be understood to be any type of vehicle, as described above, which is capable of being maneuvered above the ground for any duration of time, e.g., a drone. Similar to a ground vehicle having wheels, belts, etc., for providing mobility on terrain, an "aerial vehicle" may have one or more propellers, wings, fans, among others, for providing the ability to maneuver in the air. An "aquatic vehicle" may be understood to be any type of vehicle, as described above, which is capable of being maneuvers on or below the surface of a liquid, e.g., a boat on the surface of water or a submarine below the surface. It is appreciated that some vehicles may be configured to operate as one or more of a ground, an aerial, and/or an aquatic vehicle.

The term "autonomous vehicle" may describe a vehicle capable of implementing at least one navigational change without driver input. A navigational change may describe or include a change in one or more of steering, braking, or acceleration/deceleration of the vehicle. A vehicle may be described as autonomous even in case the vehicle is not fully automatic (e.g., fully operational with driver or without driver input). Autonomous vehicles may include those vehicles that can operate under driver control during certain time periods and without driver control during other time periods. Autonomous vehicles may also include vehicles that control only some aspects of vehicle navigation, such as steering (e.g., maintaining a vehicle course between vehicle lane constraints) or some steering operations under certain circumstances (but not under all circumstances). Still, they may leave other vehicle navigation aspects to the driver (e.g., braking or braking under certain circumstances). Autonomous vehicles may also include vehicles that share the control of one or more aspects of vehicle navigation under certain circumstances (e.g., hands-on, such as responsive to a driver input) and vehicles that control one or more aspects of vehicle navigation under certain circumstances (e.g., hands-off, such as independent of driver input). Autonomous vehicles may also include vehicles that control one or more vehicle navigation aspects under certain circumstances, such as under certain environmental conditions (e.g., spatial areas, roadway conditions). In some aspects, autonomous vehicles may handle some or all aspects of braking, speed control, velocity control, and/or steering of the vehicle. An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on-road motor vehicles) or by other relevant professional organizations. The SAE level may have a value ranging from a minimum level, e.g., level 0 (illustratively, substantially no driving automation), to a maximum level, e.g., level 5 (illustratively, full driving automation).

In the context provided herein, "vehicle operation data" may be understood to describe any type of feature related to the operation of a vehicle. By way of example, "vehicle operation data" may describe the vehicle's status, such as the type of propulsion unit(s), types of tires or propellers of the vehicle, the type of vehicle, and/or the age of the manufacturing of the vehicle. More generally, "vehicle operation data" may describe or include static features or static vehicle operation data (illustratively, features or data not changing over time). As another example, additionally or alternatively, "vehicle operation data" may describe or include features changing during the operation of the vehicle, for example, environmental conditions, such as weather conditions or road conditions during the operation of the vehicle, fuel levels, fluid levels, operational parameters of the driving source of the vehicle, etc. More generally, "vehicle operation data" may describe or include varying features or varying vehicle operation data (illustratively, time-varying features or data).

Various aspects herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A computing system may execute a machine learning model to improve a specific task's performance progressively. In some aspects, a machine learning model's parameters may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data, and the like. As described herein, a classification model may classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

In aspects provided herein, the following terms may be used as synonyms: driving parameter set, driving model parameters, driving model parameter set, safety layer parameter set, driver assistance, automated driving model parameter set, and/or the like (e.g., driving safety parameter set). These terms may correspond to groups of values used to implement one or more models for directing a vehicle to operate according to the manners described herein.

Furthermore, in aspects provided herein, the following terms may be used as synonyms: driving parameter, driving model parameter, safety layer parameter, driver assistance and/or automated driving model parameter, and/or the like (e.g., driving safety parameter), and may correspond to specific values within the previously described sets.

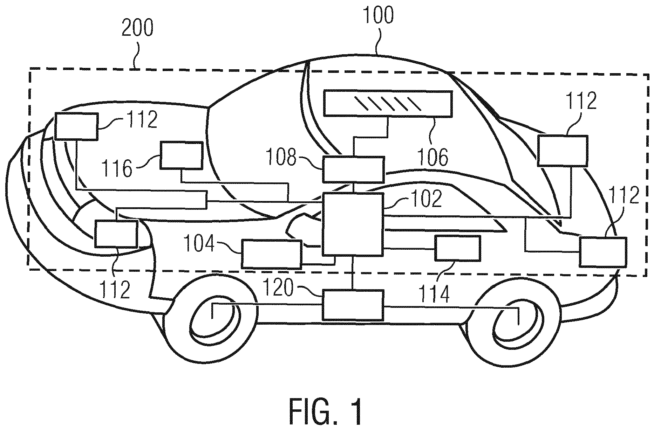

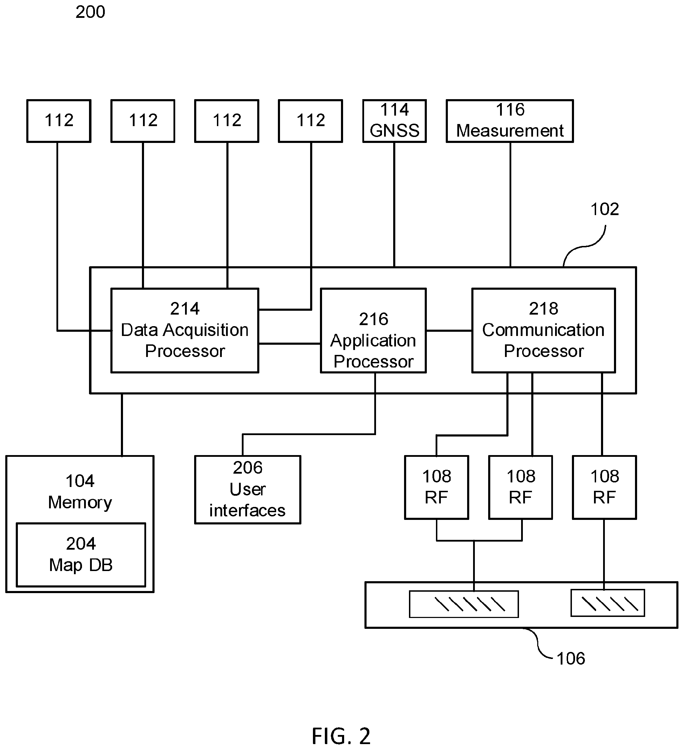

FIG. 1 shows a vehicle 100, including a mobility system 120 and a control system 200 (see also FIG. 2) in accordance with various aspects. It is appreciated that vehicle 100 and control system 200 are exemplary in nature and may thus be simplified for explanatory purposes. For example, while vehicle 100 is depicted as a ground vehicle, aspects provided herein may be equally or analogously applied to aerial vehicles such as drones or aquatic vehicles such as boats. Furthermore, the quantities and locations of elements, as well as relational distances (as discussed above, the figures are not to scale) are provided as examples and are not limited thereto. The components of vehicle 100 may be arranged around a vehicular housing of vehicle 100, mounted on or outside of the vehicular housing, enclosed within the vehicular housing, or any other arrangement relative to the vehicular housing where the components move with vehicle 100 as it travels. The vehicular housing, such as an automobile body, drone body, plane or helicopter fuselage, boat hull, or similar type of vehicular body dependent on the type of vehicle that vehicle 100 is.

In addition to including a control system 200, vehicle 100 includes a mobility system 120. Mobility system 120 may include components of vehicle 100 related to steering and movement of vehicle 100. In some aspects, where vehicle 100 is an automobile, for example, mobility system 120 may include wheels and axles, a suspension, an engine, a transmission, brakes, a steering wheel, associated electrical circuitry and wiring, and any other components used in the driving of an automobile. In some aspects, where vehicle 100 is an aerial vehicle, mobility system 120 may include one or more of rotors, propellers, jet engines, wings, rudders or wing flaps, air brakes, a yoke or cyclic, associated electrical circuitry and wiring, and any other components used in the flying of an aerial vehicle. In some aspects, where vehicle 100 is an aquatic or sub-aquatic vehicle, mobility system 120 may include any one or more of rudders, engines, propellers, a steering wheel, associated electrical circuitry and wiring, and any other components used in the steering or movement of an aquatic vehicle. In some aspects, mobility system 120 may also include autonomous driving functionality, and accordingly may include an interface with one or more processors 102 configured to perform autonomous driving computations and decisions and an array of sensors for movement and obstacle sensing. In this sense, the mobility system 120 may be provided with instructions to direct the navigation and/or mobility of vehicle 100 from one or more components of the control system 200. The autonomous driving components of mobility system 120 may also interface with one or more radio frequency (RF) transceivers 108 to facilitate mobility coordination with other nearby vehicular communication devices and/or central networking components. The devices or components can perform decisions and/or computations related to autonomous driving.

The control system 200 may include various components depending on the requirements of a particular implementation. As shown in FIG. 1 and FIG. 2, the control system 200 includes one or more processors 102, one or more memories 104, one or more data acquisition devices 112, and may include an antenna system 106 which may include one or more antenna arrays at different locations on the vehicle for radio frequency (RF) coverage, one or more radio frequency (RF) transceivers 108, one or more position devices 114 which may include components and circuitry for receiving and determining a position based on a Global Navigation Satellite System (GNSS) and/or a Global Positioning System (GPS), and one or more measurement sensors 116, e.g., speedometer, altimeter, gyroscope, velocity sensors, etc.

The control system 200 may be configured to control the vehicle's 100 mobility via mobility system 120 and/or interactions with its environment, e.g., communications with other devices or network infrastructure elements (NIEs) such as base stations, via data acquisition devices 112 and the radio frequency communication arrangement including the one or more RF transceivers 108 and antenna system 106.

The one or more processors 102 may include a data acquisition processor 214, an application processor 216, a communication processor 218, and/or any other suitable processing device. Each processor 214, 216, 218 of the one or more processors 102 may include various types of hardware-based processing devices. By way of example, each processor 214, 216, 218 may include a microprocessor, pre-processors (such as an image pre-processor), graphics processors, a central processing unit (CPU), support circuits, digital signal processors, integrated circuits, memory, or any other types of devices suitable for running applications and for image processing and analysis. In some aspects, each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors 214, 216, 218 disclosed herein may be configured to perform certain functions according to program instructions that may be stored in a memory of the one or more memories 104. In other words, a memory of the one or more memories 104 may store software that, when executed by a processor (e.g., by the one or more processors 102), controls the operation of the system, e.g., a driving and/or safety system. A memory of the one or more memories 104 may store one or more databases and image processing software, as well as a trained system, such as a neural network, or a deep neural network, for example. The one or more memories 104 may include any number of random-access memories, read-only memories, flash memories, disk drives, optical storage, tape storage, removable storage, and other storage types. Alternatively, each of processors 214, 216, 218 may include an internal memory for such storage.

The data acquisition processor 216 may include processing circuity, such as a CPU, for processing data acquired by data acquisition units 112. For example, suppose one or more data acquisition units are image acquisition units, e.g., one or more cameras. In that case, the data acquisition processor may include image processors for processing image data using the information obtained from the image acquisition units as an input. The data acquisition processor 216 may therefore be configured to create voxel maps detailing the surrounding of the vehicle 100 based on the data input from the data acquisition units 112, i.e., cameras in this example.

Application processor 216 may be a CPU, and may be configured to handle the layers above the protocol stack, including the transport and application layers. Application processor 216 may be configured to execute various applications and/or programs of vehicle 100 at an application layer of vehicle 100, such as an operating system (OS), a user interfaces (UI) 206 for supporting user interaction with vehicle 100, and/or various user applications. Application processor 216 may interface with communication processor 218 and act as a source (in the transmit path) and a sink (in the receive path) for user data, such as voice data, audio/video/image data, messaging data, application data, basic Internet/web access data, etc. In the transmit path, communication processor 218 may therefore receive and process outgoing data provided by application processor 216 according to the layer-specific functions of the protocol stack, and provide the resulting data to digital signal processor 208. Communication processor 218 may then perform physical layer processing on the received data to produce digital baseband samples, which digital signal processor may provide to RF transceiver(s) 108. RF transceiver(s) 108 may then process the digital baseband samples to convert the digital baseband samples to analog RF signals, which RF transceiver(s) 108 may wirelessly transmit via antenna system 106. In the receive path, RF transceiver(s) 108 may receive analog RF signals from antenna system 106 and process the analog RF signals to obtain digital baseband samples. RF transceiver(s) 108 may provide the digital baseband samples to communication processor 218, which may perform physical layer processing on the digital baseband samples. Communication processor 218 may then provide the resulting data to other processors of the one or more processors 102, which may process the resulting data according to the layer-specific functions of the protocol stack and provide the resulting incoming data to application processor 216. Application processor 216 may then handle the incoming data at the application layer, which can include execution of one or more application programs with the data and/or presentation of the data to a user via one or more user interfaces 206. User interfaces 206 may include one or more screens, microphones, mice, touchpads, keyboards, or any other interface providing a mechanism for user input.

The communication processor 218 may include a digital signal processor and/or a controller which may direct such communication functionality of vehicle 100 according to the communication protocols associated with one or more radio access networks, and may execute control over antenna system 106 and RF transceiver(s) 108 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of vehicle 100 shown in FIGS. 1 and 2 may depict only a single instance of such components.

Vehicle 100 may transmit and receive wireless signals with antenna system 106, which may be a single antenna or an antenna array that includes multiple antenna elements. In some aspects, antenna system 202 may additionally include analog antenna combination and/or beamforming circuitry. In the receive (RX) path, RF transceiver(s) 108 may receive analog radio frequency signals from antenna system 106 and perform analog and digital RF front-end processing on the analog radio frequency signals to produce digital baseband samples (e.g., In-Phase/Quadrature (IQ) samples) to provide to communication processor 218. RF transceiver(s) 108 may include analog and digital reception components including amplifiers (e.g., Low Noise Amplifiers (LNAs)), filters, RF demodulators (e.g., RF IQ demodulators)), and analog-to-digital converters (ADCs), which RF transceiver(s) 108 may utilize to convert the received radio frequency signals to digital baseband samples. In the transmit (TX) path, RF transceiver(s) 108 may receive digital baseband samples from communication processor 218 and perform analog and digital RF front-end processing on the digital baseband samples to produce analog radio frequency signals to provide to antenna system 106 for wireless transmission. RF transceiver(s) 108 may thus include analog and digital transmission components including amplifiers (e.g., Power Amplifiers (PAs), filters, RF modulators (e.g., RF IQ modulators), and digital-to-analog converters (DACs), which RF transceiver(s) 108 may utilize to mix the digital baseband samples received from communication processor 218 and produce the analog radio frequency signals for wireless transmission by antenna system 106. In some aspects, communication processor 218 may control the radio transmission and reception of RF transceiver(s) 108, including specifying the transmit and receive radio frequencies for the operation of RF transceiver(s) 108.

According to some aspects, the communication processor 218 includes a baseband modem configured to perform physical layer (PHY, Layer 1) transmission and reception processing to, in the transmit path, prepare outgoing transmit data provided by communication processor 218 for transmission via RF transceiver(s) 108, and, in the receive path, prepare incoming received data provided by RF transceiver(s) 108 for processing by communication processor 218. The baseband modem may include a digital signal processor and/or a controller. The digital signal processor may be configured to perform one or more of error detection, forward error correction encoding/decoding, channel coding and interleaving, channel modulation/demodulation, physical channel mapping, radio measurement and search, frequency and time synchronization, antenna diversity processing, power control, and weighting, rate matching/de-matching, retransmission processing, interference cancelation, and any other physical layer processing functions. The digital signal processor may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, the digital signal processor may include one or more processors configured to retrieve and execute program code that defines control and processing logic for physical layer processing operations. In some aspects, the digital signal processor may execute processing functions with software via the execution of executable instructions. In some aspects, the digital signal processor may include one or more dedicated hardware circuits (e.g., ASICs, FPGAs, and other hardware) that are digitally configured to specific execute processing functions, where the one or more processors of digital signal processor may offload specific processing tasks to these dedicated hardware circuits, which are known as hardware accelerators. Exemplary hardware accelerators can include Fast Fourier Transform (FFT) circuits and encoder/decoder circuits. The digital signal processor's processor and hardware accelerator components may be realized as a coupled integrated circuit in some aspects.

Vehicle 100 may be configured to operate according to one or more radio communication technologies. The digital signal processor of the communication processor 218 may be responsible for lower-layer processing functions (e.g., Layer 1/PHY) of the radio communication technologies. In contrast, a controller of the communication processor 218 may be responsible for upper-layer protocol stack functions (e.g., Data Link Layer/Layer 2 and/or Network Layer/Layer 3). The controller may thus be responsible for controlling the radio communication components of vehicle 100 (antenna system 106, RF transceiver(s) 108, position device 114, etc.) in accordance with the communication protocols of each supported radio communication technology, and accordingly may represent the Access Stratum and Non-Access Stratum (NAS) (also encompassing Layer 2 and Layer 3) of each supported radio communication technology. The controller may be structurally embodied as a protocol processor configured to execute protocol stack software (retrieved from a controller memory) and subsequently control the radio communication components of vehicle 100 to transmit and receive communication signals in accordance with the corresponding protocol stack control logic defined in the protocol stack software. The controller may include one or more processors configured to retrieve and execute program code that defines the upper-layer protocol stack logic for one or more radio communication technologies, which can include Data Link Layer/Layer 2 and Network Layer/Layer 3 functions. The controller may be configured to perform both user-plane and control-plane functions to facilitate the transfer of application layer data to and from vehicle 100 according to the specific protocols of the supported radio communication technology. User-plane functions can include header compression and encapsulation, security, error checking and correction, channel multiplexing, scheduling, and priority, while control-plane functions may include setup and maintenance of radio bearers. The program code retrieved and executed by the controller of communication processor 218 may include executable instructions that define the logic of such functions.

In some aspects, vehicle 100 may be configured to transmit and receive data according to multiple radio communication technologies. Accordingly, in some aspects, one or more of antenna system 106, RF transceiver(s) 108, and communication processor 218 may include separate components or instances dedicated to different radio communication technologies and/or unified components that are shared between different radio communication technologies. For example, in some aspects, multiple controllers of communication processor 218 may be configured to execute multiple protocol stacks, each dedicated to a different radio communication technology and either at the same processor or different processors. In some aspects, multiple digital signal processors of communication processor 218 may include separate processors and/or hardware accelerators that are dedicated to different respective radio communication technologies, and/or one or more processors and/or hardware accelerators that are shared between multiple radio communication technologies. In some aspects, RF transceiver(s) 108 may include separate RF circuitry sections dedicated to different respective radio communication technologies, and/or RF circuitry sections shared between multiple radio communication technologies. In some aspects, antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Communication processor 218 may be configured to implement one or more vehicle-to-everything (V2X) communication protocols, which may include vehicle-to-vehicle (V2V), vehicle-to-infrastructure (V2I), vehicle-to-network (V2N), vehicle-to-pedestrian (V2P), vehicle-to-device (V2D), vehicle-to-grid (V2G), and other protocols. Communication processor 218 may be configured to transmit communications including communications (one-way or two-way) between the vehicle 100 and one or more other (target) vehicles in an environment of the vehicle 100 (e.g., to facilitate coordination of navigation of the vehicle 100 in view of or together with other (target) vehicles in the environment of the vehicle 100), or even a broadcast transmission to unspecified recipients in a vicinity of the transmitting vehicle 100.

Communication processor 218 may be configured to operate via a first RF transceiver of the one or more RF transceivers(s) 108 according to different desired radio communication protocols or standards. By way of example, communication processor 218 may be configured according to a Short-Range mobile radio communication standard such as, e.g., Bluetooth, Zigbee, and the like first RF transceiver may correspond to the corresponding Short-Range mobile radio communication standard. As another example, communication processor 218 may be configured to operate via a second RF transceiver of the one or more RF transceivers(s) 108 in accordance with a Medium or Wide Range mobile radio communication standard such as, e.g., a 3G (e.g., Universal Mobile Telecommunications System - UMTS), a 4G (e.g., Long Term Evolution - LTE), or a 5G mobile radio communication standard in accordance with corresponding 3GPP (3^{rd} Generation Partnership Project) standards. As a further example, communication processor 218 may be configured to operate via a third RF transceiver of the one or more RF transceivers(s) 108 in accordance with a Wireless Local Area Network communication protocol or standard such as, e.g., in accordance with IEEE 802.11 (e.g., 802.11, 802.11a, 802.11b, 802.11g, 802.11n, 802.11p, 802.11-12, 802.11ac, 802.11 ad, 802.11ah, and the like). The one or more RF transceiver(s) 108 may be configured to transmit signals via antenna system 106 over an air interface. The RF transceivers 108 may each have a corresponding antenna element of antenna system 106, or may share an antenna element of the antenna system 106.

Memory 214 may embody a memory component of vehicle 100, such as a hard drive or another such permanent memory device. Although not explicitly depicted in FIGS. 1 and 2, the various other components of vehicle 100, e.g., one or more processors 102, are shown in FIGS. 1 and 2 may additionally each include integrated permanent and non-permanent memory components, such as for storing software program code, buffering data, etc.

The antenna system 106 may include a single antenna or multiple antennas. In some aspects, each of the one or more antennas of antenna system 106 may be placed at a plurality of locations on the vehicle 100 in order to ensure maximum RF coverage. The antennas may include a phased antenna array, a switch-beam antenna array with multiple antenna elements, etc. Antenna system 106 may be configured to operate according to analog and/or digital beamforming schemes in order to maximize signal gains and/or provide levels of information privacy. Antenna system 106 may include separate antennas dedicated to different respective radio communication technologies, and/or antennas shared between multiple radio communication technologies. While shown as a single element in FIG. 1, antenna system 106 may include a plurality of antenna elements (e.g., antenna arrays) positioned at different locations on vehicle 100. The placement of the plurality of antenna elements may be strategically chosen in order to ensure a desired degree of RF coverage. For example, additional antennas may be placed at the front, back, corner(s), and/or on the side(s) of the vehicle 100.

Data acquisition devices 112 may include any number of data acquisition devices and components depending on the requirements of a particular application. This may include: image acquisition devices, proximity detectors, acoustic sensors, infrared sensors, piezoelectric sensors, etc., for providing data about the vehicle's environment. Image acquisition devices may include cameras (e.g., standard cameras, digital cameras, video cameras, single-lens reflex cameras, infrared cameras, stereo cameras, etc.), charge coupling devices (CCDs) or any type of image sensor. Proximity detectors may include radar sensors, light detection and ranging (LIDAR) sensors, mmWave radar sensors, etc. Acoustic sensors may include: microphones, sonar sensors, ultrasonic sensors, etc. Accordingly, each of the data acquisition units may be configured to observe a particular type of data of the vehicle's 100 environment and forward the data to the data acquisition processor 214 in order to provide the vehicle with an accurate portrayal of the vehicle's environment. The data acquisition devices 112 may be configured to implement preprocessed sensor data, such as radar target lists or LIDAR target lists, in conjunction with acquired data.

Measurement devices 116 may include other devices for measuring vehicle-state parameters, such as a velocity sensor (e.g., a speedometer) for measuring a velocity of the vehicle 100, one or more accelerometers (either single-axis or multi-axis) for measuring accelerations of the vehicle 100 along one or more axes, a gyroscope for measuring orientation and/or angular velocity, odometers, altimeters, thermometers, etc. It is appreciated that vehicle 100 may have different measurement devices 116 depending on the type of vehicle it is, e.g., car vs. drone vs. boat.

Position devices 114 may include components for determining a position of the vehicle 100. For example, this may include a global position system (GPS) or other global navigation satellite system (GNSS) circuitry configured to receive signals from a satellite system and determine the vehicle 100. Position devices 114, accordingly, may provide vehicle 100 with satellite navigation features.

The one or more memories 104 may store data, e.g., in a database or in any different format, that may correspond to a map. For example, the map may indicate a location of known landmarks, roads, paths, network infrastructure elements, or other elements of the vehicle's 100 environment. The one or more processors 102 may process sensory information (such as images, radar signals, depth information from LIDAR, or stereo processing of two or more images) of the environment of the vehicle 100 together with position information, such as a GPS coordinate, a vehicle's ego-motion, etc., to determine a current location of the vehicle 100 relative to the known landmarks, and refine the determination of the vehicle's location. Certain aspects of this technology may be included in a localization technology, such as a mapping and routing model.

The map database (DB) 204 may include any type of database storing (digital) map data for the vehicle 100, e.g., for the control system 200. The map database 204 may include data relating to the position, in a reference coordinate system, of various items, including roads, water features, geographic features, businesses, points of interest, restaurants, gas stations, etc. The map database 204 may store the locations of such items and descriptors relating to those items, including, for example, names associated with any of the stored features. In some aspects, a processor of the one or more processors 102 may download information from the map database 204 over a wired or wireless data connection to a communication network (e.g., over a cellular network and/or the Internet, etc.). In some cases, the map database 204 may store a sparse data model including polynomial representations of certain road features (e.g., lane markings) or target trajectories for the vehicle 100. The map database 204 may also include stored representations of various recognized landmarks that may be provided to determine or update a known position of the vehicle 100 with respect to a target trajectory. The landmark representations may include data fields such as landmark type, landmark location, among other potential identifiers.

Furthermore, the control system 200 may include a driving model, e.g., implemented in an advanced driving assistance system (ADAS) and/or a driving assistance and automated driving system. By way of example, the control system 200 may include (e.g., as part of the driving model) a computer implementation of a formal model such as a safety driving model. A safety driving model or driving model may be or include a mathematical model formalizing an interpretation of applicable laws, standards, policies, etc. that are applicable to self-driving vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic and in turn limit the scalability of system deployment; and third, the interpretation should be efficiently verifiable in the sense that it can be rigorously proven that the self-driving (autonomous) vehicle correctly implements the interpretation of the law. A safety driving model, illustratively, may be or include a mathematical model for safety assurance that enables identification and performance of proper responses to dangerous situations such that self-perpetuated accidents can be avoided.

As described above, the vehicle 100 may include the control system 200 and described with reference to FIG. 2. The vehicle 100 may include the one or more processors 102 integrated with or separate from an engine control unit (ECU), which may be included in the mobility system 120 of the vehicle 100. The control system 200 may, in general, generate data to control or assist to control the ECU and/or other components of the vehicle 100 to directly or indirectly control the movement of the vehicle 100 via mobility system 120. The one or more processors 102 of the vehicle 100 may be configured to implement the aspects and methods described herein.

The components illustrated in FIGS. 1 and 2 may be operatively connected to one another via any appropriate interfaces. Furthermore, it is appreciated that not all the connections between the components are explicitly shown, and other interfaces between components may be covered.

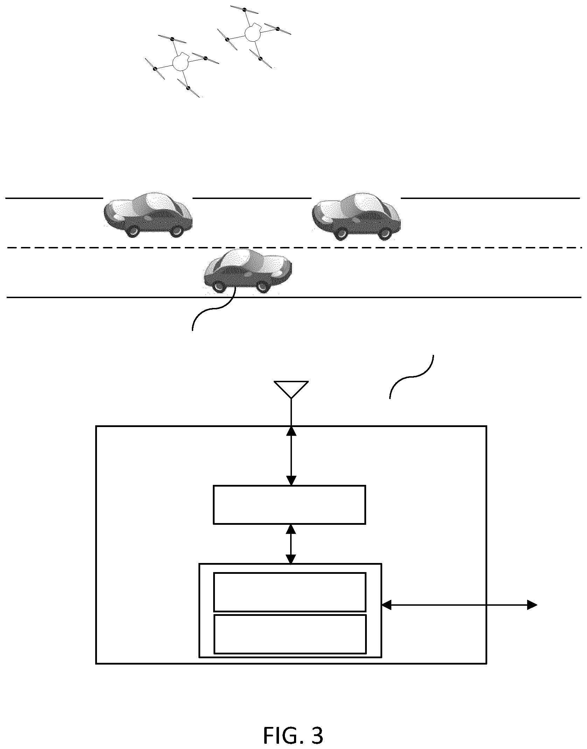

FIG. 3 shows an exemplary network area 300 according to some aspects. Network area 300 may include a plurality of vehicles 100, which may include, for example, drones and ground vehicles. Any one of these vehicles may communicate with one or more other vehicles 100 and/or with network infrastructure element (NIE) 310. NIE 310 may be a base station (e.g., an eNodeB, a gNodeB, etc.), a road side unit (RSU), a road sign configured to wirelessly communicate with vehicles and/or a mobile radio communication network, etc., and serve as an interface between one or more of vehicles 100 and a mobile radio communications network, e.g., an LTE network or a 5G network.

NIE 310 may include, among other components, at least one of an antenna system 312, an RF transceiver 314, and a baseband circuit 316 with appropriate interfaces between each of them. In an abridged overview of the operation of NIE 310, NIE 310 may transmit and receive wireless signals via antenna system 312, which may be an antenna array including multiple antenna arrays. Antenna system 312 may include multiple antenna elements (e.g., multiple antenna arrays) in order to employ multiple-input and multiple-output (MIMO) methods and schemes.

RF transceiver 314 may perform transmit and receive RF processing to convert outgoing baseband samples from baseband circuit 316 into analog radio signals to provide to antenna system 312 for radio transmission and to convert incoming analog radio signals received from antenna system 312 into baseband samples to provide to baseband circuit 316. Accordingly, RF transceiver 314 may be configured to operate similarly to the RF transceiver(s) described in FIGS. 1 and 2, albeit perhaps on a much larger scale (e.g., amplifiers to transmit higher power signals, etc.).

Baseband circuit 316 may include a controller 310 and a physical layer processor 318 which may be configured to perform transmit and receive PHY processing on baseband samples received from RF transceiver 314 to provide to a controller 310 and on baseband samples received from controller 310 to provide to RF transceiver 314. In some aspects, the baseband modem 316 may be located external to the NIE 310, e.g., at a centralized location of a mobile radio communication network. Controller 310 may control the communication functionality of NIE 310 according to the corresponding radio communication technology protocols, which may include exercising control over antenna system 312, RF transceiver 314, and physical layer processor 318. Each of RF transceiver 314, physical layer processor 318, and controller 310 may be structurally realized with hardware (e.g., with one or more digitally-configured hardware circuits or FPGAs), as software (e.g., as one or more processors executing program code defining arithmetic, control, and I/O instructions stored in a non-transitory computer-readable storage medium), or as a mixed combination of hardware and software. NIE 310 may also include an interface 320 for communicating with (e.g., receiving instructions from, providing data to, etc.) with a core network according to some aspects.

Additionally, NIE 310 may include a memory 330, which may be internal to NIE 310 (as shown in FIG. 3) or external to NIE 310 (not shown). Memory 330 may store one or more maps of the coverage area of NIE 310 among other types of information. Each of the one or more maps may include a static layer depicting environmental elements that remain largely unchanged over longer periods of time (e.g., roads, structures, trees, etc.) and/or a dynamic layer with more frequent changes (e.g., vehicles, detected obstacles, construction, etc.). In some aspects, memory 330 may also store maps corresponding to one or more neighboring areas of NIE 310 so as to provide vehicles within its coverage area with information of neighboring coverage areas (e.g., to facilitate the process when a vehicle moves to the coverage of the neighboring NIE).

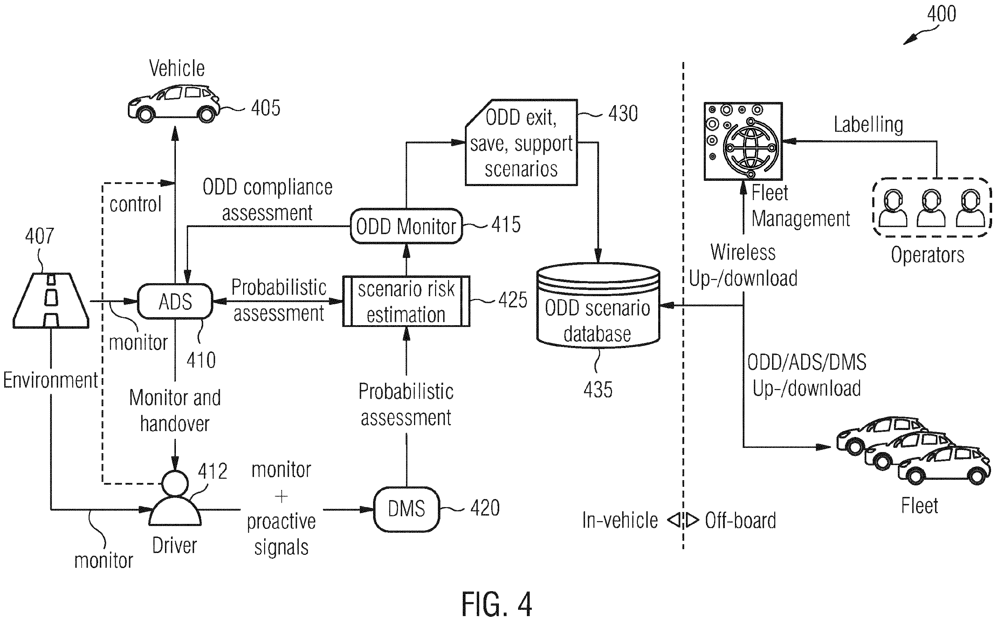

FIG. 4 is a diagram that shows various components related to driver monitoring. Some of the features or components may be implemented or integrated into a vehicle 405. The components illustrated in FIG. 4 may be operatively connected to one another via any appropriate interfaces. Furthermore, it is appreciated that not all the connections between the components are explicitly shown, and other interfaces between components may be covered.

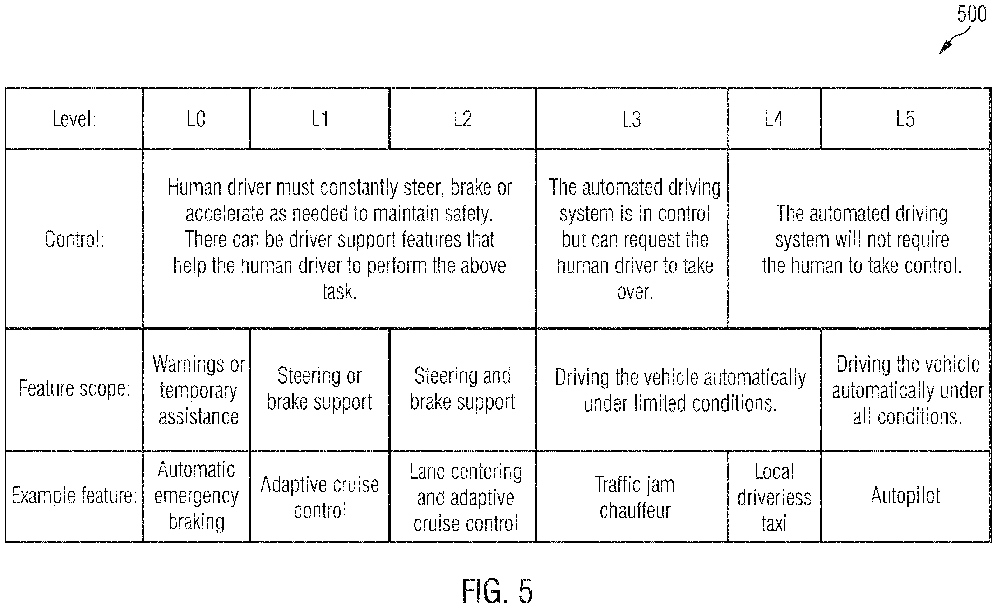

Vehicle 405 may be any suitable type of vehicle described herein, e.g., vehicle 100 described in connection with FIG. 1. The vehicle 405 can include automated driving systems (ADS) 410 or, in other cases, may be or include an advanced driving assistance system (ADAS). The ADS 410 may include a control system (not shown), e.g., the control system 200 described in connection with FIG. 2. The vehicle 405 (e.g., through a control system) may be configured to operate at one or more different levels of driving automation. Table 500 of FIG. 5 describes various known automated driving levels. According to various aspects provided herein, the vehicle 405 may operate at L3, L4, and/or L5 automation level.

Regarding the aspects provided herein, the ADS component 410 is responsible for determining vehicle data, including environmental perception data. The ADS 410 can be configured to evaluate the environment surrounding the vehicle 405 to produce environmental perception data. The environmental perception data may include a risk assessment or data indicating a safety risk concerning (perceived) features or elements external to the vehicle 405. The risk assessment may indicate a collision risk involving one or more perceived or detected elements in the vehicle's environment or vicinity 405.

More specifically, the ADS 410 may generate the vehicle data (e.g., environmental perception data) from sensor data obtained from one or more sensors, e.g., sensors of the vehicle 405 or other external sources. The detected or perceived elements can include, for example, vehicles, pedestrians, bicyclists, animals, road obstructions, or any other type of road actor.

The vehicle 405 may further include an Operational Design Domain monitor 415 and a Driver Monitoring System (DMS) 420. The Operational Design Domain (ODD) of the vehicle 405 may be the operating conditions under which a given driving system/vehicle is designed explicitly to or properly function or operate. The ODD monitor 415 may determine ODD compliance for the vehicle 405. For example, the ODD monitor 415 can determine whether the vehicle 405 is operating with the proper operating conditions for a current operation mode. If the ODD monitor determines that vehicle 405 is not operating under the proper conditions, then the vehicle 405 is determined to be out of the ODD and not in ODD compliance. For example, the ODD monitor 415 may determine or detect when the vehicle 405 is not in ODD compliance in response to determining that a safety risk to vehicle 405 exceeds a threshold.

The ODD monitor 415 can inform the ADS 410 (e.g., send a data signal) to indicate the ODD compliance status of the vehicle 405. The ADS 410 can be configured in response to take one or more actions to resolve the ODD non-compliance.

The ODD monitor 415 can inform or provide the ODD compliance assessment to the ADS 410, which may take one or more actions in response. For example, in the case where the ODD assessment indicates non-compliance due to a high level of risk, the ADS 410 may take one or more actions such as a handover in which automated control of the vehicle by the control system of the vehicle 405 transitions to driver/manual control of the vehicle. In other cases, the ADS 410 may take one more actions even when the ODD compliance is reached, but a determined safety risk of the vehicle is too high. In yet some examples, the ADS may initiate a "reverse transition". For example, if the human driver is determined or interpreted of not being capable of controlling the vehicle, e.g., due to a heart attack, epileptic shock, or when asleep, unconscious, etc., the ADS may take control from the driver or prevent the driver from controlling the vehicle, e.g., the ADS may maintain automated control.

The driving monitoring system or DMS 420 may be a component of the vehicle 405 that monitors the driver 412 of the vehicle 405. According to aspects provided herein, the DMS 420 may monitor and interpret driver data (e.g., driver feedback). Further, the DMS 420 can generate or produce driver perception data based on the monitoring and interpretation of driver data. In some instances, the DMS 420 can ascertain an awareness/attention status or level of the driver 412. The DMS 420 may obtain and analyze and interpret sensor data, e.g., image, video, audio, concerning the driver to determine the awareness/attention status. The DMS 420 can determine how attentive the driver 412 in one or more situations or contexts. This awareness or attention level may be in the form of a probabilistic risk assessment.

Interpreting driver feedback includes the DMS 420 configured to interpret signals from the driver 412, e.g., as safety-enhancing feedback. The signals may be an audio and/or visual signal. The driver can be in the form of proactive feedback. The DMS 420 interprets driver feedback (e.g., signals) to determine or estimate information regarding one or more objects or elements in the vehicle's environment or vicinity. In one example, the driver 412 can provide one or more signals, that if correctly interpreted, indicate the existence (or potential existence) of one or more objects in the vehicle's vicinity. Further, the feedback information may indicate a level of risk or threat regarding such an object or objects. The driver perception data can indicate and be used to indicate or infer a safety risk (e.g., collision risk) for one or more elements in the vehicle's vicinity or environment.

The DMS 420 can provide information that can be used directly or indirectly by the ODD monitor 415 for assessing ODD compliance. For example, the vehicle 405 of FIG. 4 includes a risk estimator 425, a component configured to make or produce risk assessments for the vehicle 405 regarding current or (immediate) upcoming situations/scenarios. The risk assessment or risk assessment data can be sent to and used by the ODD monitor 415 to determine ODD compliance, e.g., the ODD compliance concerning a current driving or automation mode of the vehicle 405 for a current or upcoming scenario. In at least some instances, the DMS 420 provides driver data or driver perception data to the risk estimator 425.

The risk estimator 425 can be a component for evaluating scenarios involving the vehicle 405, e.g., situations regarding the vehicle 405 and the vehicle's surrounding environment to generate or produce a risk assessment. The risk estimator 425 can generate a risk assessment that includes data indicating the vehicle's risk, e.g., a risk of collision. In aspects provided herein, the risk estimator 425 may generate or provide a risk assessment by assimilating or integrating information from different sources, e.g., using driver perception data and environmental perception data. The environmental perception data (which can be obtained and/or determined from sensor data of the vehicle's external environment) can include data indicating a safety risk (e.g., collision risk) for the vehicle 405. The safety risk may be specified with respect to one or more perceived elements or objects in the vehicle's vicinity.

Using at least these data types (e.g., driver perception data and the vehicle data), the risk estimator 425 can determine a combined or integrated risk assessment regarding the vehicle. The risk estimator 425 can integrate the driver feedback or the driver perception data with the ADS risk assessment (from the vehicle or environmental perception data). The result produces an integration of risk assessment from the driver perception data and the environmental perception data. The integrated risk assessment or risk assessment may be a probabilistic estimation. In determining the risk assessment, the risk estimator 425 determines the existence or likelihood of elements in the vehicle's environment and one or more (potential) situations/scenarios involving the vehicle 405. Further, the risk estimator 425 may determine a safety risk such as a collision risk between the vehicle 405 and such elements.

The ODD monitor can use the integrated risk assessment to determine whether the vehicle is currently in or out of the vehicle's ODD. The ODD monitor 415 may evaluate ODD compliance by comparing the determined integrated risk assessment with one or more risk thresholds. The particular threshold(s) used for comparison may be selected based on the driver perception data, indicating the driver's attentional awareness.

The risk estimator 420 can provide the risk assessment to the ADS 410. In response, the ADS 410 may take one or more actions, even if the ODD assessment provided by the ODD monitor 415 does not indicate out of the ODD. For example, if the integrated risk determined by the risk estimator 425 is higher than the level of risk determined by the ADS 410, then the ADS may initiate action(s) to change the driving behavior even if the vehicle is in ODD compliance. That is, automated control of the vehicle 405 may be maintained, but the driving behavior may be altered by ADS 410, e.g., the ADS 410 may cause a change in driving model parameters to drive with more caution or safety due to the risk assessment provided by the risk estimator 425.

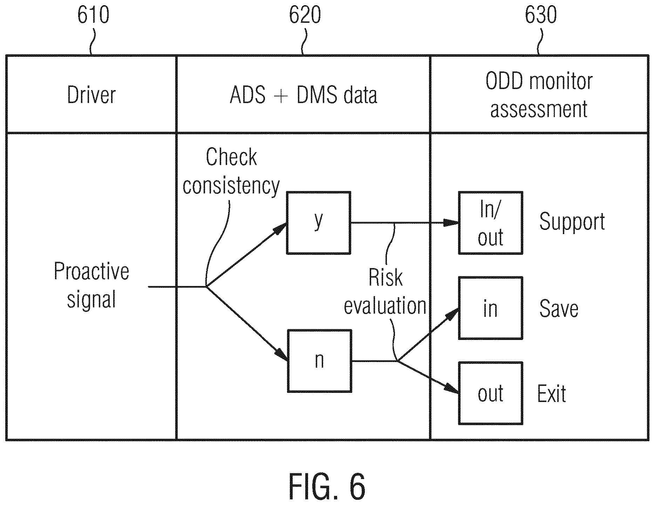

According to aspects provided herein, the vehicle 405 may systematically collect ODD compliance assessments. ODD compliance assessments can be collected and stored, for example, in a database or other storage 435 that may be part of the vehicle, or in other cases, may be a remote database. The ODD compliance assessments may be stored along with the corresponding scenarios, labelling (e.g., see below with respect to FIG. 6) which may be obtained from the vehicle data and the driver perception data. In some cases, not every ODD compliance assessment may be stored. In some instances, a subset of the ODD compliance assessments, e.g., corner cases such as those in which the driver perception data and the vehicle data are discordant, may be stored.

For example, in situations where the driver proactively provides feedback, and thus a ground-truth label (e.g., interpreted driver feedback) may be stored together with a snapshot (e.g., sensor image data) of the current environment. Since a driver will be active mostly in critical situations, such data will contain an above-average proportion of corner cases, e.g., challenging cases for the DMS and ADS in the form of high perception uncertainty perception errors (misclassifications, missed objects). Detected corner cases and associated ground-truth labels can be collected systematically and are forwarded by the ODD monitor to a database, e.g., database 435. Since a driver might intentionally or unintentionally provide an incorrect label, each pair of corner case and ground-truth data may be later verified by an operator (e.g., certified operator) first before it is shared or used by other users. That is, the data may be updated with the verification information by certified or legitimate operators. This verification may be in the form or similar to labeling tasks during any dataset generation, and no significant training is necessary for such an operator.

As a result, a database of corner cases can be of great value for other ADS perception systems because critical situations do not frequently occur during normal operations. Traditional dataset collection techniques have a notorious lack of such corner cases, which makes, for example, neural networks trained with such a database can provide informed results, e.g., regarding risk, ODD compliance, and overall provide superior to results for driver systems compared to others. This way, an entire fleet of vehicles can benefit by using the data. That, the database information may be used for a fleet with the information being transmitted or downloaded to one more vehicles for use in their driving and perception system.

In aspects provided herein, the ODD compliance assessment may fall into certain categories as determined by the ODD monitor 415 and its compliance assessment. As such, the ODD compliance assessments may be labeled, e.g., by the ODD monitor 415 or another suitable component according to its category. In one or more examples example, the ODD compliance assessments may be annotated or labeled "exit", "save", or "support".

FIG. 6 shows an exemplary diagram illustrating the ODD compliance assessment using driver perception data (e.g., proactive driver signal(s)) and the ADS risk assessment. The driver feedback 610, which may be in the form of a proactive signal, may be consistent with the ADS data at 620 to produce an ODD assessment at 630.

The label "exit" may indicate situations where the perception data of the vehicle system and the driver feedback disagree, and this discrepancy suggests that the current ODD compliance assessment is incorrect and needs to be changed to maintain safety. For example, such situations appear if the driver points out elements of high estimated risk that the vehicle perception system has missed and cannot handle. In that case, an exit from the current ODD to another, safe ODD is being forced.

The label "support" may be used for ODD assessments where the driver perception data agrees or supports the environmental perception data of the vehicle data agrees with. The "support" label means the risk estimation determines that the vehicle is either in or out of the defined ODD, and the driver perception data (e.g., driver feedback) supports the current ODD compliance determination.

The "save" label may be used to indicate situations in which the environmental perception data of the vehicle data disagrees with the driver perception data but does not alter or appreciably alter the relevant safety risk, e.g., safety risk and the vehicle remains in ODD compliance. The risk indicated in the driver perception data is within a specific range of the risk indicated by the environmental perception data.

According to aspects provided herein, a driver can be proactive and provide feedback and notification regarding possible or pending hazards or indicate their attention status during automated vehicle control. Therefore, the vehicle's mechanism can confirm (ODD support) or correct (ODD save, exit) the ODD assessment and thus reduce the critical time for performing a handover operation or avoiding a handover operation altogether.

The safety analysis or risk estimation in aspects provided herein relates to assimilating information from the inside (driver perception) and outside (vehicle environment perception). In some instances, a driver 412 can proactively signal his attention status. In such cases, the DMS 420, e.g., through sensors connected (e.g., through an interface), can interpret and determine attention status or awareness level from the driver 412. This interpreted information can be passed on to the risk estimator module 425 for risk estimation. At or near the same time, the risk estimator 425 can receive the sensing input (e.g., risk estimation of the vehicle's environment) from the ADS 410. The risk estimator 425 can combine or integrate both types of data to determine or calculate a quantitative risk, or a combined risk. The combined risk determined by the risk estimator 425 may be determined based on the consistency between the types of data, e.g., the vehicle data and the driver perception data. In at least one example, the risk estimator 425 may determine a combined risk from the vehicle data and the driver perception data based on a consistency between risk indicated, inferred, and/or determined from the vehicle data and risk indicated, inferred, and/or determined from the driver perception data. The combined risk may be produced regarding or be associated with imminent actions regarding features or elements external to the vehicle 405.

If the recognized driver signal(s) are consistent with the available vehicle information, then the vehicle data's risk estimate will not affect or appreciably affect the ADS risk estimate (indicated in the vehicle data) up to an uncertainty correction. However, if the proactive driver signal is not consistent with the vehicle data from the ADS 410, then determining the integrated risk estimate may include incorporating extra precautions to ensure safety. For example, if the proactive driver signals attention but the DMS recognizes unawareness, the combined estimate will output a high risk. Further, ins such instances, the ADS 410 may provide a driver alert depending on the current environment and the determined risk. The risk estimator 425 may use one or more awareness or attention thresholds and compare the determined awareness level from the DMS 420 with one or more awareness/attention thresholds. The surpassing of the one or more attention/awareness threshold level can be used to calculate the integrated risk. For example, greater levels of detected driver awareness can produce a smaller integrated risk assessment. In comparison, low or lower driver awareness levels can produce a more significant integrated risk assessment by the risk estimator 425.

In other cases, the driver perception data may be interpreted when the driver 412 proactively signals or refers to the vehicle's external environment. That is, the DMS 420 may interpret the driver perception data (e.g., from sensors) and determine a driver's indication regarding an element or object in the vehicle's vicinity. In such cases, a fused environment may be created, e.g., by the risk estimator 425. All elements detected by both data sources (e.g., vehicle data from ADS 410 and the driver perception data from the DMS 420) can be aligned temporally and spatially in a common coordinate system, using standard sensor fusion techniques. The fused environment can be a temporal and/or spatial representation of the environment surrounding the vehicle, including one or more elements in the vehicle's environment.

The generated or created fused environment can contain the same number or more elements than each of the individual sources. Any additional elements can be correct observations enhancing the overall perception completeness or false positives. The fused environment can include a safety risk for each of the elements or objects detected. The risk estimator 425, to ensure safety, can account for all observations from both sources, and the ADS 410 can then evaluate the resulting combined/integrated risk for the planned driving strategy. For example, if the data sources are inconsistent or discordant (e.g., observations by driver and ADS conflict or the risks indicated from the sources are in conflict), then the ADS 410 may be configured to choose a more cautious option. This situation may occur when a possible object in the vehicle's vicinity is seen or detected by one of the sources but is not seen or detected by the other source. In such a case, observation of the object or element is added to the combined environment with a safety risk (e.g., collision risk) determined for the object/element.

In general, if the determined safety risk is beyond an acceptable threshold for any elements of the combined or fused environment, then an ODD exit can be triggered, or the respective driving task can be adapted if an ODD save with reduced risk is possible. The ADS 410 can adopt a driving strategy that results in safer driving behavior to avoid accidents.

As described herein, sensor data captured of the driver, e.g., sensor data of the driver's feedback, can be analyzed and interpreted. The DMS 420 and/or any other suitable component may be configured to interpret driver feedback. The DMS 420 (or another component), for example, may include logic (interpretation logic) for understanding or interpreting the driver data captured from one or more sensors of the vehicle.

The interpretation logic may, in some instances, rely on a hierarchical signal and interpretation structure. Namely, the signals may be a combination of audiovisual signals. Since the signals are audiovisual, e.g., they are any suitable combination of audio and visual signals, this reduces the incidence of false positives and provides enhanced robustness. Any suitable signal detection techniques known in the art may be used, including, for example, speech detection, physical feedback (e.g., from buttons such as on steering or console), gaze estimation or head pose estimation of the driver, hand gesture recognition (e.g., swipe left/right, circle clockwise/counterclockwise actions), finger gestures (e.g., any of one, two, & three fingers up), pointing gestures (e.g., including with full arm), and the like.

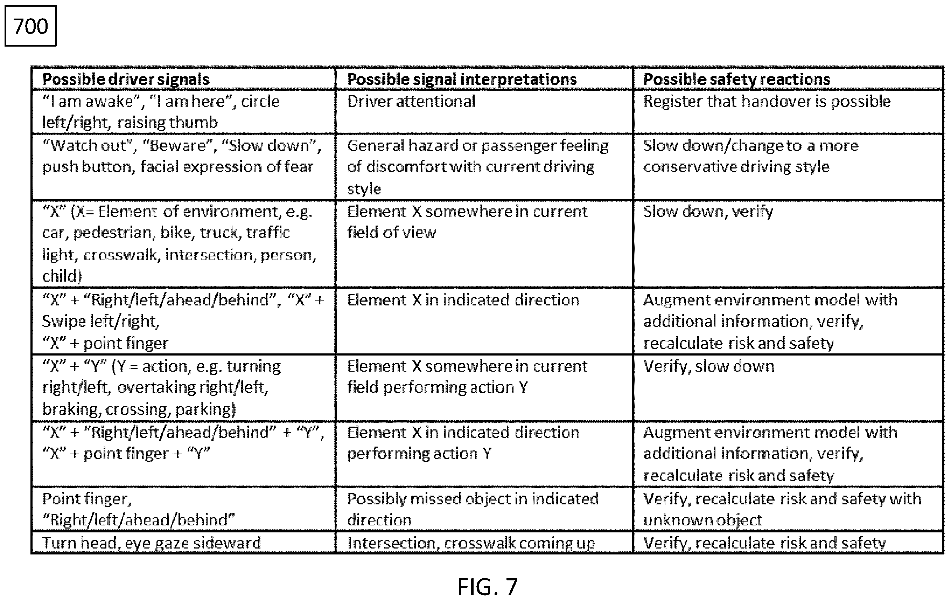

The interpretation logic can include or use a mapping of signals to communicated information can be implemented in various ways. Table 700 of FIG. 7 shows one exemplary type of mapping; however, other implementations and variants can be realized and used.

In at least one example, a neural network or machine learning logic trained for driver signal interpretation may be used. The interpretation logic may be trained for application-specific audiovisual signals and can be configured to determine or calculate a probabilistic risk assessment of the driver's monitoring ability and compute feedback of the driver's risk assessment ((e.g., driver risk assessment regarding possible elements in vehicle's environment).

In various aspects provided herein, one or more types of sensors may be used. For example, in-vehicle for the driver may include one or multiple of the following: RGB cameras, Infrared (IR) cameras, IR LED, Time-of-flight (ToF) camera, dynamic vision sensor (event camera), Structured Light at diverse wavelengths, microphones (e.g., placed in the driver's cabin for audio input and output), physical buttons (e.g., on the steering wheel), interactive displays or other interfaces.

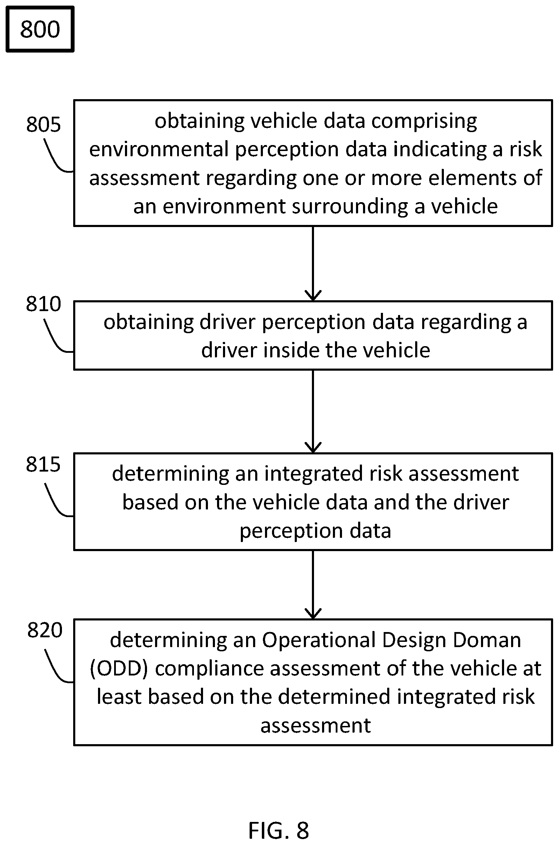

FIG. 8 shows an exemplary method 800 that may be performed in accordance with aspects provided herein. The method 800 may be performed by one or more components of a vehicle. The vehicles may be ones that support or include autonomous-type control (e.g., L3). In some cases, the method may be embodied as instructions contained (non-transitory) computer-readable medium with the method being performed by one or more processors executing the instructions. T

he method 800 includes at 805, obtaining vehicle data comprising environmental perception data indicating a risk assessment regarding one or more perceived elements of an environment surrounding a vehicle. At 810, the method 800 includes obtaining driver perception data regarding a driver inside the vehicle. The further includes at 815 determining an integrated risk assessment based on the vehicle data and the driver perception data. Then at 820, the method includes determining an Operational Design Doman (ODD) compliance assessment of the vehicle at least based on the determined integrated risk assessment.

According to aspects provided herein, the data used for ODD assessment, e.g., the driver perception data and the vehicle/environmental data, may include uncertainties. That is, uncertainties in the perception can arise due to imperfections or noise on sensor information and algorithms. Uncertainties may take the form of probability of existence, which expresses how likely it is that an object that has been detected is a real object. This uncertainty can be expressed as a probabilistic value of existence. Further, uncertainties may take the form of properties of an object/element, e.g., an exact velocity or position. This uncertainty is usually expressed by a distribution (e.g., Gaussian). The vehicles or components described herein may be configured to process and make decisions with such types of uncertainties.

Further, as described, uncertainties can be handled by thresholding. In one example, a vehicle has some threshold that influences whether or how information is used. In the case of the probability of an element or object's existence, a probability value could be used. If the object probability is higher than the threshold, then the object is considered existing; otherwise, no object is considered. For the distribution of values, such a threshold could be, e.g., defined by a multiple sigma quantile of the distribution.

Further, in aspects provided herein, components of the vehicles described herein may calculate a risk based on the given information and uncertainties. As used herein, risk may be defined as the "probability of something happening multiplied by the resulting cost or benefit it does". Any suitable or appropriate risk estimation methods known in the art may be used. If collision severity is used for risk, a simple inelastic collision model can be applied. With a risk calculation, it is possible to calculate for each given object in the environment a probabilistic risk value, referring to harmful collision with this object, given its probability of existence and a distribution of the information. However, for the vehicle's decision-making, the use of a threshold or thresholds may be used or required in which the threshold(s) defines the acceptable risk.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. System for a vehicle (405) comprising:
a plurality of sensors configured to detect data of an environment external to a vehicle (405) and further configured to detect data of a driver inside the vehicle (405), wherein at least one of the plurality sensors is inside the vehicle (405) and configured to face the driver;
a driver monitoring system (DMS) (420) configured to generate driver perception data regarding the driver inside the vehicle (405);
an automated driving system (ADS) (410) configured to generate vehicle data comprising environmental perception data indicating a risk assessment regarding an environment surrounding the vehicle (405);
a risk estimator (425) configured to determine an integrated risk assessment based on the vehicle data and the driver perception data, wherein the vehicle data further comprises driving monitoring system data regarding the driver, and wherein the risk estimator (425) configured to determine the integrated risk assessment comprises the risk estimator (425) configured to determine a combined risk from the vehicle data and the driver perception data based on a consistency between risk indicated from the vehicle data and risk indicated from the driver perception data, wherein the driver perception data comprises data indicating a probabilistic risk assessment regarding one or more elements of the environment surrounding the vehicle (405), wherein the driver perception data includes data indicating a probabilistic risk assessment of the driver's monitoring ability, and wherein the DMS (420) configured to generate the driver perception data comprises the DMS (420) configured to:
determine an awareness level of the driver from sensor data from one or more sensors inside the vehicle (405); and
determine the probabilistic risk assessment of the driver's monitoring ability including comparing the determined awareness level of the driver to one or more threshold values each associated with a level of driver awareness; and
an Operational Design Domain (ODD) monitor (415) configured to determine ODD compliance assessment of the vehicle (405) at least based on the determined integrated risk assessment and whether the combined risk is greater than a threshold.

2. The system of claim 1, wherein the DMS (420) configured to determine an attention or awareness level of the driver from sensor data comprises the DMS (420) configured to: interpret a signal from the driver using the sensor data, and determine the attention or awareness level based on the interpretation of the signal from the driver, wherein the signal from the driver comprises an audio and/or visual signal.

3. The system of either one of claims 1 or 2, wherein the risk estimator (425) configured to determine the integrated risk assessment comprises the risk estimator (425) configured to:
generate fused environment data from the environmental risk assessment data and the driver perception data, the fused environment data including a temporal and/or spatial representation of the environment surrounding the vehicle (405), the temporal and/or spatial representation including one or more elements in the environment surrounding the vehicle (405).

4. The system of claim 3,
wherein the risk estimator (425) configured to determine the integrated risk assessment comprises the risk estimator (425) configured to determine a risk for each of the one or more elements in the fused environment data, and
wherein the ODD monitor (415) configured to determine the ODD compliance assessment of the vehicle (405) comprises the ODD monitor (415) configured to determine whether the risk of any element of the fused environmental data is greater than a threshold.

5. The system of any one of claims 1 to 4, wherein the DMS (420) configured to generate the driver perception data comprises the DMS (420) configured to interpret feedback from the driver using sensor data provided from at least one of the plurality of sensors inside of the vehicle (405).

6. The system of claim 5, wherein the feedback provided from the sensor data comprises an audio and/or visual signal from the driver.

7. The system of claim 6, wherein the audio and/or visual signal from the driver comprises one or more gestures.

8. The system of any one of claims 1 to 7, wherein the ODD monitor (415) is further configured to provide the ODD compliance assessment to the ADS (410) of the vehicle (405), wherein the ADS (410) is further configured to:
modify or update one or more driving parameters of the ADS (410) based at least on the ODD compliance assessment in order to reduce risk.

9. The system of any one of claims 1 to 8, the ADS (410) comprising a control system configured to control the vehicle (405) to operate in accordance with a driving model including predefined driving model parameters.

10. A method comprising:
obtaining vehicle data comprising environmental perception data indicating a risk assessment regarding one or more perceived elements of an environment surrounding a vehicle (405);
obtaining driver perception data regarding a driver inside the vehicle (405), wherein the driver perception data comprises data indicating a probabilistic risk assessment of the driver's monitoring ability, wherein determining the driver perception data comprises:
determining an awareness level of the driver from sensor data from one or more sensors inside the vehicle (405); and
determining a probabilistic risk assessment of the driver's monitoring ability comprising comparing the determined awareness level of the driver to one or more threshold values each associated with a level of driver awareness;
determining an integrated risk assessment based on the vehicle data and the driver perception data; and
determining an Operational Design Domain (ODD) compliance assessment of the vehicle (405) at least based on the determined integrated risk assessment and whether the combined risk is greater than a threshold.

## Patentansprüche

1. System für ein Fahrzeug (405), das Folgendes umfasst:
eine Vielzahl von Sensoren, die dazu ausgebildet sind, Daten einer Umgebung außerhalb eines Fahrzeugs (405) zu erkennen, und ferner dazu ausgebildet sind, Daten eines Fahrers innerhalb des Fahrzeugs (405) zu erkennen, wobei sich mindestens einer der Vielzahl von Sensoren innerhalb des Fahrzeugs (405) befindet und dazu ausgebildet ist, dem Fahrer zugewandt zu sein;
ein Fahrerüberwachungssystem (Driver Monitoring System = DMS) (420), das dazu ausgebildet ist, Fahrerwahrnehmungsdaten bezüglich des Fahrers innerhalb des Fahrzeugs (405) zu erzeugen;
ein automatisiertes Fahrsystem (Automated Driving System = ADS) (410), das dazu ausgebildet ist, Fahrzeugdaten zu erzeugen, die Umgebungswahrnehmungsdaten umfassen, die eine Risikobewertung bezüglich einer Umgebung, die das Fahrzeug umgibt, angeben (405);
einen Risikoschätzer (425), der dazu ausgebildet ist, eine integrierte Risikobewertung basierend auf den Fahrzeugdaten und den Fahrerwahrnehmungsdaten zu bestimmen, wobei die Fahrzeugdaten ferner Fahrüberwachungssystemdaten bezüglich des Fahrers umfassen, und wobei der Risikoschätzer (425), der dazu ausgebildet ist, die integrierte Risikobewertung zu bestimmen, den Risikoschätzer (425) umfasst, der dazu ausgebildet ist, ein kombiniertes Risiko aus den Fahrzeugdaten und den Fahrerwahrnehmungsdaten basierend auf einer Konsistenz zwischen dem aus den Fahrzeugdaten angezeigten Risiko und dem aus den Fahrerwahrnehmungsdaten angezeigten Risiko zu bestimmen, wobei die Fahrerwahrnehmungsdaten Daten umfassen, die eine probabilistische Risikobewertung in Bezug auf ein oder mehrere Elemente der das Fahrzeug umgebenden Umgebung angeben (405), wobei die Fahrerwahrnehmungsdaten Daten beinhalten, die eine probabilistische Risikobewertung der Überwachungsfähigkeit des Fahrers angeben, und wobei das DMS (420), das zum Erzeugen der Fahrerwahrnehmungsdaten ausgebildet ist, das DMS (420) umfasst, das für Folgendes ausgebildet ist:
Bestimmen eines Bewusstseinsniveaus des Fahrers aus Sensordaten von einem oder mehreren Sensoren innerhalb des Fahrzeugs (405); und
Bestimmen der probabilistischen Risikobewertung der Überwachungsfähigkeit des Fahrers, einschließlich des Vergleichens des bestimmten Bewusstseinsniveaus des Fahrers mit einem oder mehreren Schwellenwerten, die jeweils mit einem Niveau des Fahrerbewusstseins assoziiert sind; und
einen ODD-Monitor (415) (Operational Design Domain = bauartbedingter Einsatzbereich), der dazu ausgebildet ist, eine ODD-Konformitätsbewertung des Fahrzeugs (405) zumindest basierend auf der bestimmten integrierten Risikobewertung und ob das kombinierte Risiko größer als ein Schwellenwert ist, zu bestimmen.

2. System nach Anspruch 1, wobei das DMS (420), das dazu ausgebildet ist, ein Aufmerksamkeits- oder Bewusstseinsniveau des Fahrers aus Sensordaten zu bestimmen, das DMS (420) umfasst, das für Folgendes ausgebildet ist: Interpretieren eines Signals von dem Fahrer unter Verwendung der Sensordaten, und Bestimmen des Aufmerksamkeits- oder Bewusstseinsniveaus basierend auf der Interpretation des Signals von dem Fahrer, wobei das Signal von dem Fahrer ein Audio- und/oder visuelles Signal umfasst.

3. System nach einem der Ansprüche 1 oder 2, wobei der Risikoschätzer (425), der dazu ausgebildet ist, die integrierte Risikobewertung zu bestimmen, den Risikoschätzer (425) umfasst, der für Folgendes ausgebildet ist:
Erzeugen fusionierter Umgebungsdaten aus den Umgebungsrisikobewertungsdaten und den Fahrerwahrnehmungsdaten, wobei die fusionierten Umgebungsdaten eine zeitliche und/oder räumliche Repräsentation der Umgebung, die das Fahrzeug umgibt (405), beinhalten, wobei die zeitliche und/oder räumliche Repräsentation ein oder mehrere Elemente in der Umgebung, die das Fahrzeug umgibt (405), beinhaltet.

4. System nach Anspruch 3,
wobei der Risikoschätzer (425), der dazu ausgebildet ist, die integrierte Risikobewertung zu bestimmen, den Risikoschätzer (425) umfasst, der dazu ausgebildet ist, ein Risiko für jedes des einen oder der mehreren Elemente in den fusionierten Umgebungsdaten zu bestimmen, und
wobei der ODD-Monitor (415), der dazu ausgebildet ist, die ODD-Konformitätsbewertung des Fahrzeugs (405) zu bestimmen, den ODD-Monitor (415) umfasst, der dazu ausgebildet ist zu bestimmen, ob das Risiko eines beliebigen Elements der fusionierten Umgebungsdaten größer als eine Schwelle ist.

5. System nach einem der Ansprüche 1 bis 4, wobei das DMS (420), das zum Erzeugen der Fahrerwahrnehmungsdaten ausgebildet ist, das DMS (420) umfasst, das zum Interpretieren einer Rückmeldung vom Fahrer unter Verwendung von Sensordaten ausgebildet ist, die von mindestens einem der mehreren Sensoren innerhalb des Fahrzeugs (405) bereitgestellt werden.

6. System nach Anspruch 5, wobei die Rückmeldung, die von den Sensordaten bereitgestellt wird, ein Audio- und/oder visuelles Signal von dem Fahrer umfasst.

7. System nach Anspruch 6, wobei das Audio- und/oder visuelle Signal von dem Fahrer eine oder mehrere Gesten umfasst.

8. System nach einem der Ansprüche 1 bis 7, wobei der ODD-Monitor (415) ferner dazu ausgebildet ist, die ODD-Konformitätsbewertung dem ADS (410) des Fahrzeugs (405) bereitzustellen, wobei das ADS (410) ferner für Folgendes ausgebildet ist:
Ändern oder Aktualisieren eines oder mehrerer Fahrparameter des ADS (410) basierend zumindest auf der ODD-Konformitätsbewertung, um das Risiko zu reduzieren.

9. System nach einem der Ansprüche 1 bis 8, wobei das ADS (410) ein Steuersystem umfasst, das dazu ausgebildet ist, das Fahrzeug (405) so zu steuern, dass es gemäß einem Fahrmodell arbeitet, das vordefinierte Fahrmodellparameter beinhaltet.

10. Verfahren, das Folgendes umfasst:
Erhalten von Fahrzeugdaten, die Umgebungswahrnehmungsdaten umfassen, die eine Risikobewertung bezüglich eines oder mehrerer wahrgenommener Elemente einer Umgebung, die ein Fahrzeug umgibt, angeben (405);
Erhalten von Fahrerwahrnehmungsdaten bezüglich eines Fahrers innerhalb des Fahrzeugs (405), wobei die Fahrerwahrnehmungsdaten Daten umfassen, die eine probabilistische Risikobewertung der Überwachungsfähigkeit des Fahrers angeben, wobei das Bestimmen der Fahrerwahrnehmungsdaten Folgendes umfasst:
Bestimmen eines Bewusstseinsniveaus des Fahrers aus Sensordaten von einem oder mehreren Sensoren innerhalb des Fahrzeugs (405); und
Bestimmen einer probabilistischen Risikobewertung der Überwachungsfähigkeit des Fahrers, umfassend das Vergleichen des bestimmten Bewusstseinsniveaus des Fahrers mit einem oder mehreren Schwellenwerten, die jeweils mit einem Niveau des Fahrerbewusstseins assoziiert sind;
Bestimmen einer integrierten Risikobewertung basierend auf den Fahrzeugdaten und den Fahrerwahrnehmungsdaten; und
Bestimmen einer ODD-Konformitätsbewertung (Operational Design Domain = bauartbedingter Einsatzbereich) des Fahrzeugs (405) zumindest basierend auf der bestimmten integrierten Risikobewertung und ob das kombinierte Risiko größer als ein Schwellenwert ist.

## Revendications

1. Système pour véhicule (405) comprenant :
une pluralité de capteurs configurés pour détecter des données d'un environnement externe à un véhicule (405) et configurés en outre pour détecter des données d'un conducteur à l'intérieur du véhicule (405), au moins l'un de la pluralité de capteurs étant situé à l'intérieur du véhicule (405) et configuré pour faire face au conducteur ;
un système de surveillance de conducteur (DMS) (420) configuré pour générer des données de perception de conducteur concernant le conducteur à l'intérieur du véhicule (405) ;
un système de conduite automatisée (ADS) (410) configuré pour générer des données de véhicule comprenant des données de perception environnementales indiquant une évaluation de risque concernant un environnement entourant le véhicule (405) ;
un estimateur de risque (425) configuré pour déterminer une évaluation de risque intégré sur la base des données de véhicule et des données de perception de conducteur, les données de véhicule comprenant en outre des données de système de surveillance de conduite concernant le conducteur, et l'estimateur de risque (425) configuré pour déterminer l'évaluation de risque intégré comprenant l'estimateur de risque (425) configuré pour déterminer un risque combiné à partir des données de véhicule et des données de perception de conducteur sur la base d'une cohérence entre un risque indiqué par les données de véhicule et un risque indiqué par les données de perception de conducteur, les données de perception de conducteur comprenant des données indiquant une évaluation probabiliste de risque concernant un ou plusieurs éléments de l'environnement entourant le véhicule (405), les données de perception de conducteur incluant des données indiquant une évaluation probabiliste de risque lié à la capacité de surveillance du conducteur, et le DMS (420) configuré pour générer les données de perception de conducteur comprenant le DMS (420) configuré pour :
déterminer un niveau de conscience du conducteur à partir des données de capteur provenant d'un ou plusieurs capteurs à l'intérieur du véhicule (405) ; et
déterminer l'évaluation probabiliste de risque lié à la capacité de surveillance du conducteur, incluant la comparaison du niveau déterminé de conscience du conducteur à une ou plusieurs valeurs seuil qui sont chacune associées à un niveau de conscience du conducteur ; et
un moniteur (415) du Domaine de Conception Opérationnelle (ODD) configuré pour déterminer une évaluation de conformité ODD du véhicule (405) au moins sur la base de l'évaluation de risque intégré déterminée et du fait que le risque combiné est ou non supérieur à un seuil.

2. Système selon la revendication 1, dans lequel le DMS (420) configuré pour déterminer un niveau d'attention ou de conscience du conducteur à partir des données de capteur comprend le DMS (420) configuré pour :
interpréter un signal provenant du conducteur au moyen des données de capteur, et déterminer le niveau d'attention ou de conscience sur la base de l'interprétation du signal provenant du conducteur, le signal provenant du conducteur comprenant un signal audio et/ou visuel.

3. Système selon l'une ou l'autre des revendications 1 et 2, dans lequel l'estimateur de risque (425) configuré pour déterminer l'évaluation de risque intégré comprend l'estimateur de risque (425) configuré pour :
générer des données d'environnement fusionnées à partir des données d'évaluation de risque environnemental et des données de perception de conducteur, les données d'environnement fusionnées incluant une représentation temporelle et/ou spatiale de l'environnement entourant le véhicule (405), la représentation temporelle et/ou spatiale incluant un ou plusieurs éléments dans l'environnement entourant le véhicule (405).

4. Système selon la revendication 3,
dans lequel l'estimateur de risque (425) configuré pour déterminer l'évaluation de risque intégré comprend l'estimateur de risque (425) configuré pour déterminer un risque pour chacun des un ou plusieurs éléments dans les données d'environnement fusionnées, et
le moniteur ODD (415) configuré pour déterminer l'évaluation de conformité ODD du véhicule (405) comprend le moniteur ODD (415) configuré pour déterminer si le risque concernant tout élément des données environnementales fusionnées est ou non supérieur à un seuil.

5. Système selon l'une quelconque des revendications 1 à 4, dans lequel le DMS (420) configuré pour générer les données de perception de conducteur comprend le DMS (420) configuré pour interpréter un retour d'informations provenant du conducteur en utilisant des données de capteur fournies par au moins l'un de la pluralité de capteurs à l'intérieur du véhicule (405).

6. Système selon la revendication 5, dans lequel le retour d'informations fourni par les données de capteur comprend un signal audio et/ou visuel provenant du conducteur.

7. Système selon la revendication 6, dans lequel le signal audio et/ou visuel provenant du conducteur comprend un ou plusieurs gestes.

8. Système selon l'une quelconque des revendications 1 à 7, dans lequel le moniteur ODD (415) est en outre configuré pour fournir l'évaluation de conformité ODD à l'ADS (410) du véhicule (405), l'ADS (410) étant en outre configuré pour :
modifier ou mettre à jour une ou plusieurs paramètres de conduite de l'ADS (410) sur la base au moins de l'évaluation de conformité ODD afin de réduire le risque.

9. Système selon l'une quelconque des revendications 1 à 8, dans lequel l'ADS (410) comprend un système de commande configuré pour commander le véhicule (405) pour qu'il fonctionne selon un modèle de conduite incluant des paramètres de modèle de conduite prédéfinis.

10. Procédé comprenant :
l'obtention de données de véhicule comprenant des données de perception environnementales indiquant une évaluation de risque concernant un ou plusieurs éléments perçus d'un environnement entourant un véhicule (405) ;
l'obtention de données de perception de conducteur concernant un conducteur à l'intérieur du véhicule (405), les données de perception de conducteur comprenant des données indiquant une évaluation probabiliste de risque lié à la capacité de surveillance du conducteur, la détermination des données de perception de conducteur comprenant :
la détermination d'un niveau de conscience du conducteur à partir des données de capteur provenant d'un ou plusieurs capteurs à l'intérieur du véhicule (405) ; et
la détermination d'une évaluation probabiliste de risque lié à la capacité de surveillance du conducteur comprenant la comparaison du niveau de conscience du conducteur à une ou plusieurs valeurs seuil qui sont chacune associées à un niveau de conscience du conducteur ;
la détermination d'une évaluation de risque intégré sur la base des données de véhicule et des données de perception de conducteur ; et
la détermination d'une évaluation de conformité du véhicule (405) au Domaine de Conception Opérationnelle (ODD) au moins sur la base de l'évaluation de risque intégré déterminée et du fait que le risque combiné est ou non supérieur à un seuil.
